# EUROPEAN PATENT SPECIFICATION

(11) **EP 3 252 306 B1**
(45) Date of publication and mention of the grant of the patent: **26.12.2018**
(21) Application number: 16172218.6
(22) Date of filing: 31.05.2016
(51) Int. Cl.: F03D 80/70, F16C 17/02, F16C 17/03, F16C 23/02

(54) **A WIND TURBINE INCLUDING A SLIDING BEARING**
WINDTURBINE MIT EINEM GLEITLAGER
ÉOLIENNE COMPRENANT UN PALIER LISSE

(43) Date of publication of application: 06.12.2017
(73) Proprietor: Siemens Aktiengesellschaft, 80333 München (DE)
(72) Inventor: Eriksen, Uffe, 8700 Horsens (DK); Olesen, Dennis, 8000 Aarhus (DK); Thomsen, Kim, 7430 Ikast (DK); Thorhauge, Morten, 8200 Aarhus (DK)

(56) References cited:
- GB-A- 1 380 000
- US-A- 4 032 199
- US-A1- 2012 099 993

## Description

### Technical Field

The invention relates to a wind turbine and use of such a wind turbine for generating electric power.

### Technical Background

As the nominal output power of wind turbines increases, so do the size and weight of the individual components of the wind turbines. For example, rotor diameters of current large wind turbines exceed a hundred meters. Accordingly the weight born by bearings of the wind turbines has increased dramatically over the years.

Commonly the bearings used for bearing the shaft of a wind turbine are ball or roller bearings and thus of the hydrostatic type. The balls or rollers of the bearing are lubricated using a viscous lubricant. A problem with such ball or roller bearings is the relatively small contact area between the inner and outer bearing rings on the one hand and the balls or rollers on the other. This small contact area causes high loads and accordingly high wear and tear on the balls or rollers and also on the raceways of the bearing rings. For this reason sliding bearings are contemplated for use in wind turbine applications.

US 2012/099993 A1 describes a wind turbine bearing realized to bear a shaft of a wind turbine, which shaft is caused to rotate by a number of blades connected to the shaft. The wind turbine main bearing includes a fluid bearing with a plurality of bearing pads arranged about the shaft.

Sliding bearings are of the hydrodynamic type which means that lubrication is provided by a thin film of a lubricant. This thin film is generated and maintained by the sliding movement of the sliding surfaces on each other. However, this thin film will disappear during standstill of the bearing. Thus, there is a high friction force to be overcome during startup which will decrease significantly once the lubricant film has been restored.

In a wind turbine application using a sliding bearing there may not be sufficient wind to overcome this friction and to start rotation of the wind rotor and the shaft connected thereto. This causes undesirably long downtimes after shutdown of a wind turbine, e.g. due to maintenance or after periods of still air.

Accordingly there is a need for improved apparatuses and operating methods regarding the use of hydrodynamic bearings in wind turbines.

### Summary of the Invention

To improve on at least one of the aforementioned aspects, the invention provides a wind turbine including a rotor comprising a plurality of rotor blades connected to a hub, a shaft having a first end connected to the hub and a second end connected to a generator. Herein the term "connected" as relating to the connection of the hub, the shaft and the generator includes both direct and indirect types of connection. A common example for an indirect connection would be by means of a gear box or the like. According to the invention the wind turbine further includes a hydrodynamic bearing comprising a lubrication arrangement and a plurality of pads each having a sliding surface adapted to bear the shaft.

A tilting pad hydrodynamic bearing has an advantage over the bearings used in the prior art in that it offers a degree of freedom with regard to the contact area between the rotating and the static part of the assembly. This makes it possible to choose a total surface area of the pads large enough to withstand the forces put on them through the shaft but also smaller than that of a conventional hydrodynamic bearing thereby reducing friction.

A tilting pad bearing is advantageous in that it can dynamically adapt to varying forces transmitted through the shaft. Furthermore a tilting pad bearing may be easier to manufacture and have lower weight than a standard hydrodynamic bearing.

According to the invention the plurality of pads includes at least one pad that is movable in a radial direction. Herein the radial direction is a direction perpendicular to the longitudinal axis of the shaft. The movable pad can ease maintenance of the bearing. For example the movable pad may be moved away from the shaft and its sliding surface lubricated or the part of the pad including the sliding surface can be replaced easily. In such a case it may be possible to operate the wind turbine continuously by engaging the shaft by means of one set of pads while replacing a second set of pads moved away from the shaft and vice versa.

According to the invention the at least one movable pad is adapted to lift the shaft. This is especially useful in configurations including a fixed or non-movable pad. Lifting the shaft by means of the movable pad will also lift that shaft from the fixed or non-movable pad also facilitating maintenance of this pad.

The at least one movable pad may include a hydraulic cylinder arrangement. Hydraulic cylinder arrangements represent a well-known means for moving high loads such as a large shaft as commonly used wind turbines.

The plurality of pads may each include a lubricant spray nozzle adapted to receive lubricant from the lubrication arrangement and to lubricate the pad. The lubricant spray nozzle may be provided with a pressurised lubricant such as oil which then serves to reduce friction between the sliding surface of the pad and the rotating part, i.e. the shaft or a ring or disc connected to the shaft.

In a wind turbine having a shaft extending in a mainly horizontal direction the pads of the bearing can be arranged along only a section of the perimeter of the shaft. For example, each of the plurality of pads may be arranged within a lower half of a perimeter of the shaft. This can provide some room for small movements of the shaft caused by varying forces on the wind rotor and transmitted to the shaft through the hub.

Preferably the wind turbine further includes a control unit connected to the at least one movable pad and to the lubrication arrangement. The control unit may be adapted to, in a first step, command the at least one movable pad to lift the shaft and to command the lubrication arrangement to provide lubricant to at least one other pad among the plurality of pads. By lifting the shaft lubricant may be provided to the sliding surfaces of the static or non-movable pads at a lower pressure.

The control unit may be further adapted to, in a second step, command the at least one movable pad to retract and to command the lubrication arrangement to provide lubricant to the at least one movable pad. In this way the invention provides for a simple way of lubricating a tilting pad hydrodynamic bearing after standstill of the wind turbine so that the force of even low winds acting on the wind rotor may suffice for starting the wind turbine.

The control unit may be further adapted to repeat the first and second steps during startup of the wind turbine. For example, the first and second steps can be repeated with different movable pads, if more than one movable pad is present, until sufficient lubricant is provided to all pads and the initial stick-slip effect has been overcome.

A second aspect of the invention is directed at the use of a wind turbine according to the preceding inventive aspect for generating electric power.

### Brief Description of the Drawings

The invention will be better understood from the following drawings in which a preferred embodiment of the invention will be illustrated by way of example. In the drawings:
Figure 1 shows an embodiment of a wind turbine according to the invention;
Figure 2 shows a view of an exemplary embodiment of the tilting pad hydrodynamic bearing;
Figure 3 shows a cross-sectional view of the exemplary embodiment of the tilting pad hydrodynamic bearing;
Figure 4 shows a first enlarged partial view of the bearing of Figure 3;
Figure 5 shows a second enlarged partial view of the bearing of Figure 3; and
Figure 6 shows an exemplary embodiment of a sliding surface section of a pad of the tilting pad hydrodynamic bearing of the invention.

### Detailed Description of the Drawings

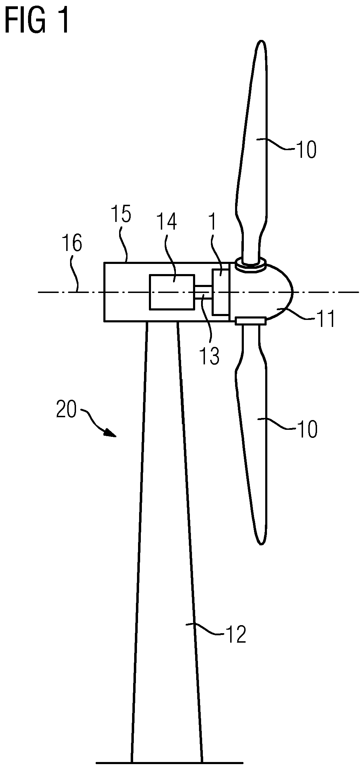

Figure 1 shows a wind turbine 20 according to the invention. The wind turbine 20 includes a tower 12, a nacelle 15 arranged at a top end of the tower 12, and a wind rotor. The wind rotor includes a plurality of rotor blades 10 and a rotor hub 11. The rotor hub 11 is connected to a generator 14 located inside the nacelle 15 through a shaft 13. The shaft 13 is supported by a bearing 1 also located inside the nacelle 15. The generator 13 serves for converting rotational energy of the rotor 10 into electricity. The rotor hub 11, the bearing 1, the generator 13 and the main shaft 14 are arranged about an axis of rotation 16.

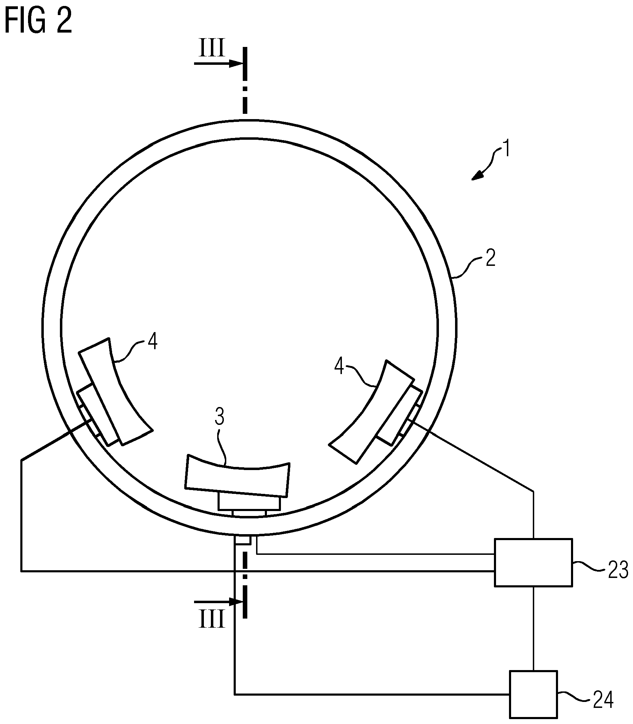

Figure 2 shows a view of an exemplary embodiment of the hydrodynamic bearing 1. The bearing 1 comprises a ring or housing 2 which may have a circular shape but could also have a different shape such as a rectangular shape. A plurality of pads 3, 4 are arranged on a surface of the ring facing radially inwards towards the axis of rotation 16 (not shown in Fig. 2). The ring does not need to be concentrically arranged about the axis of rotation 16 but may be arranged in such a manner in some embodiments of the invention. Among the pads 3, 4 there is at least one pad 3 which is movable in a radial direction. In particular the pad 3 may be movable in a vertical direction. In the embodiment of Fig. 2 there are two static or non-movable pads 4. However, the invention does not necessarily include any such static or non-movable pads. For example, the bearing 1 could comprise two, three, four or any higher number of movable pads 3 and no static or non-movable pad 4 at all. The pads 3, 4 are adapted to bear the shaft 13 of the wind turbine 20. The pads 3, 4 may be pivotable about an axis extending in a radial direction with regard to the axis of rotation 16. The pads 3, 4 may be arranged in an off-centre fashion relative to this pivot axis. The friction between the rotating shaft 13 and the sliding surface of the pads 3, 4 will then cause the pads 3, 4 to align with the relative direction of movement of the surface of the shaft 13. In Fig. 2 the shaft 13 (not shown) would rotate in a clockwise direction which is why the left side of the pads 3, 4 appears larger than their right side. In order to achieve low friction, a lubrication arrangement 23 is provided for supplying lubricant to the pads 3, 4 and for collecting lubricant leaking from the pads 3, 4. The at least one movable pad 3 and the lubrication arrangement 23 may be controlled by a control unit 24 of the wind turbine or included in the bearing 1.

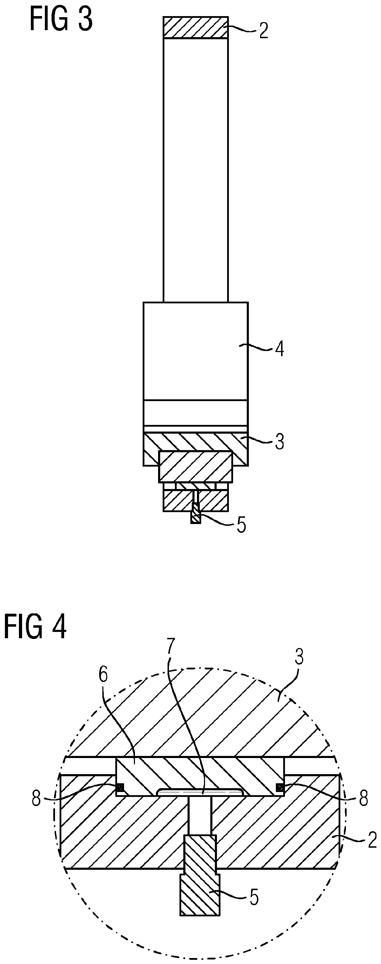

Figure 3 shows a cross-sectional view along the line III-III indicated in Fig. 2. As can be seen form Fig. 3 the movable pad 3 includes a hydraulic cylinder arrangement 5 for moving the pad 3 in the radial direction. Such hydraulic cylinder arrangements can exert high forces which makes them suitable for the present invention. However, other means may be used for the same purpose, e.g. electric machines, levers or the like. The hydraulic cylinder arrangement 5 is adapted to lift the shaft 13 (not shown) in the movement of direction of the movable pad 3. By moving the shaft 13 the movable pad 3 can lift the shaft 13 off the remaining pads 3, 4, e.g. off the static or non-movable pads 4. Moreover, the movable pad 3 may retract thereby resting the shaft 13 entirely on the remaining pads. This is useful for maintenance such as replacing worn pads 3, 4 or for easier generation of a lubricant film on the sliding surfaces of the pads 3, 4 during startup of the wind turbine 20.

Figure 4 shows a first enlarged partial view of the bearing of Figure 3. More precisely, Fig. 4 shows an enlarged partial view of a surrounding of the hydraulic cylinder arrangement 5 as shown in Fig. 3. The hydraulic cylinder arrangement 5 may include a head 6 to be moved by a pressurised hydraulic liquid such as hydraulic oil. In Fig. 4 the movable pad 3 and the hydraulic cylinder arrangement 5 are shown in a retracted position with the head 6 being in a low position. The head 6 may include a groove or cavity 7 adapted to receive the pressurised hydraulic liquid. The groove or cavity 7 is advantageous in that it distributes the pressure more evenly over the area of the head 6 due to its larger contact area. The head 6 may be sealed by a seal 8 circumferentially arranged about the head 6. The seal 8 reduces or eliminates leakage of pressurised hydraulic liquid from underneath the head 6.

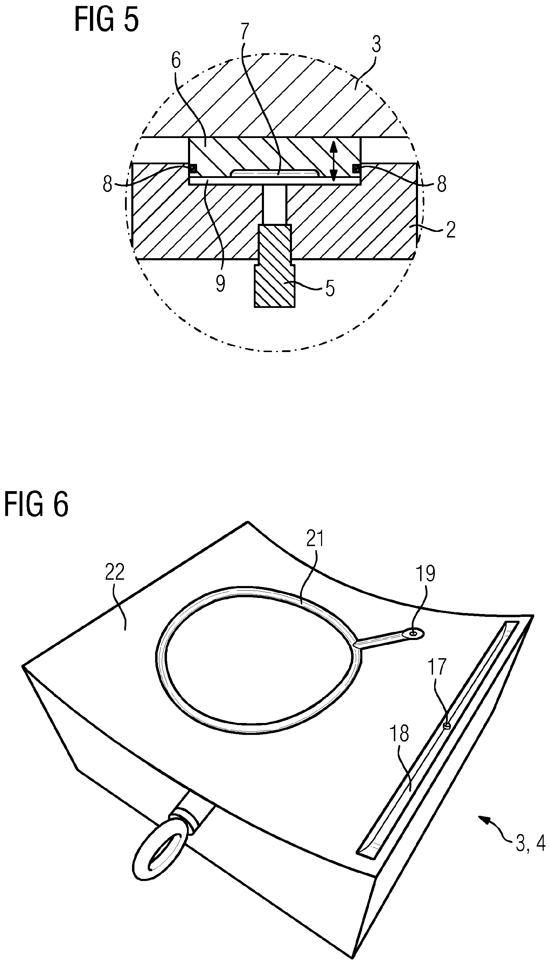

Figure 5 shows a second enlarged partial view of the bearing of Figure 3, this time in a deployed position. As can be seen, the head 6 has lifted as the pressurised hydraulic liquid entered the groove or cavity 7. As the head 6 lifts, a cavity 9 forms underneath the head 6 filling with hydraulic liquid. The head 6 exerts a lifting force to the pad 3 lifting it in the radial direction.

Figure 6 shows an exemplary embodiment of a sliding surface section of a pad of the hydrodynamic bearing of the invention. The sliding surface section may be used in a movable or non-movable pad 3, 4. It includes a sliding surface 22 whereon the shaft (or a ring or disc affixed to the shaft) will slide during operation. The sliding surface 22 may include a low friction material layer or coating such as nylon, teflon or the like to reduce friction and wear. In the sliding surface 22 of the exemplary embodiment shown in Fig. 6 there are two grooves 18 and 21 which are adapted to distribute lubricant on the sliding surface 22. In more detail, the sliding surface 22 may include a rectangular groove 18 which may be arranged at a "windward" side of the sliding surface 22, i.e. that side of the sliding surface 22 where a particular point on the surface of the shaft first enters the sliding surface 22 prior to moving across the sliding surface 22. A nozzle 17 arranged inside the rectangular groove 18 provides lubricant to the groove 18 which will then spread the lubricant on the sliding surface 22 and on the shaft, disc or ring. To aid initial build-up of the lubricant film, lubricant may also be provided to the circular groove 21 through a nozzle 19. In particular the lubricant may be provided to the circular groove 21 after standstill of the wind turbine at a high pressure thus spreading from the circular groove 21 at the centre of the sliding surface 22 more easily during startup.

Although the invention has been shown and described with respect to exemplary embodiments thereof, various other changes, omissions, and additions in form and detail thereof may be made therein bearing in mind that the scope of protection is defined by the claims. While the invention has been described in connection with a preferred embodiment, it is not intended to limit the scope of the invention to the particular form set forth, but on the contrary, it is intended to cover such alternatives, modifications, and equivalents as may be included within the scope of the invention as defined by the appended claims.

## Claims

1. A wind turbine (20) including a rotor comprising a plurality of rotor blades (10) connected to a hub (11), a shaft (13) having a first end connected to the hub (11) and a second end connected to a generator (14), **characterised in that** the wind turbine (20) further includes a hydrodynamic bearing (1) comprising a lubrication arrangement (23) and a plurality of pads (3, 4) each having a sliding surface (22) adapted to bear the shaft (13),
- wherein the plurality of pads (3, 4) includes at least one pad (3) that is movable in a radial direction,
- wherein the at least one movable pad (3) is adapted to lift the shaft (13).

2. The wind turbine (20) of one of the claim 1, wherein the at least one movable pad (3) includes a hydraulic cylinder arrangement (5).

3. The wind turbine (20) of one of the preceding claims, wherein each of the plurality of pads (3, 4) includes a lubricant spray nozzle (17, 19) adapted to receive lubricant from the lubrication arrangement (23) and to lubricate the pad (3, 4).

4. The wind turbine (20) of one of the preceding claims, wherein each of the plurality of pads (3, 4) is arranged within a lower half of a perimeter of the shaft (13).

5. The wind turbine (20) of one of the preceding claims, further including a control unit (24) connected to the at least one movable pad (3) and to the lubrication arrangement (23) and adapted to, in a first step, command the at least one movable pad (3) to lift the shaft (13) and to command the lubrication arrangement (23) to provide lubricant to at least one other pad (4) among the plurality of pads (3, 4).

6. The wind turbine (20) of the preceding claim, wherein the control unit (24) is further adapted to, in a second step, command the at least one movable pad (3) to retract and to command the lubrication arrangement (23) to provide lubricant to the at least one movable pad (3).

7. The wind turbine (20) of claims 5 and 6, wherein the control unit (24) is further adapted to repeat the first and second steps during startup of the wind turbine (20).

8. Use of a wind turbine (20) according to one of the preceding claims for generating electric power.

## Patentansprüche

1. Windenergieanlage (20) mit einem Rotor, der mehrere mit einer Nabe (11) verbundene Rotorblätter (10) und eine Welle (13) umfasst, deren erstes Ende mit der Nabe (11) und deren zweites Ende mit einem Generator (14) verbunden ist, **dadurch gekennzeichnet, dass** die Windenergieanlage (20) ferner ein hydrodynamisches Lager (1) mit einer Schmieranordnung (23) und mehreren Segmenten (3, 4) aufweist, die jeweils eine Gleitfläche (22) aufweisen, welche zum Tragen der Welle (13) ausgelegt ist,
- wobei zu den mehreren Segmenten (3, 4) mindestens ein Segment (3) gehört, das in radialer Richtung beweglich ist,
- wobei das mindestens eine bewegliche Segment (3) so ausgelegt ist, dass es die Welle (13) anhebt.

2. Windenergieanlage (20) nach Anspruch 1, wobei das mindestens eine bewegliche Segment (3) eine Hydraulikzylinderanordnung (5) aufweist.

3. Windenergieanlage (20) nach einem der vorhergehenden Ansprüche, wobei jedes der mehreren Segmente (3, 4) eine Schmiermittelspritzdüse (17, 19) aufweist, die so ausgelegt ist, dass sie Schmiermittel aus der Schmieranordnung (23) aufnimmt und das Segment (3, 4) schmiert.

4. Windenergieanlage (20) nach einem der vorhergehenden Ansprüche, wobei jedes der mehreren Segmente (3, 4) in einer unteren Hälfte eines Umfangs der Welle (13) angeordnet ist.

5. Windenergieanlage (20) nach einem der vorhergehenden Ansprüche, die ferner eine Steuereinheit (24) aufweist, die mit dem mindestens einen beweglichen Segment (3) und der Schmieranordnung (23) verbunden und so ausgelegt ist, dass sie bei einem ersten Schritt das mindestens eine bewegliche Segment (3) dazu veranlasst, die Welle (13) anzuheben, und die Schmieranordnung (23) dazu veranlasst, mindestens ein weiteres Segment (4) unter den mehreren Segmenten (3, 4) mit Schmiermittel zu versorgen.

6. Windenergieanlage (20) nach dem vorhergehenden Anspruch, wobei die Steuereinheit (24) ferner so ausgelegt ist, dass sie bei einem zweiten Schritt das mindestens eine bewegliche Segment (3) zum Einfahren veranlasst und die Schmieranordnung (23) dazu veranlasst, das mindestens eine bewegliche Segment (3) mit Schmiermittel zu versorgen.

7. Windenergieanlage (20) nach Anspruch 5 und 6, wobei die Steuereinheit (24) ferner so ausgelegt ist, dass sie den ersten und den zweiten Schritt beim Anfahren der Windenergieanlage (20) wiederholt.

8. Verwendung einer Windenergieanlage (20) nach einem der vorhergehenden Ansprüche zum Erzeugen von elektrischem Strom.

## Revendications

1. Éolienne (20), comprenant un rotor comprenant une pluralité de pales de rotor (10) raccordées à un moyeu (11), un arbre (13) présentant une première extrémité raccordée au moyeu (11) et une deuxième extrémité raccordée à une génératrice (14), **caractérisée en ce que** l'éolienne (20) comprend en outre un palier hydrodynamique (1) comprenant un agencement de lubrification (23) et une pluralité de patins (3, 4) présentant respectivement une surface de glisse (22) conçue pour supporter l'arbre (13),
- dans laquelle la pluralité de patins (3, 4) comprennent au moins un patin (3) qui est mobile dans une direction radiale,
- dans laquelle le au moins un patin mobile (3) est conçu pour soulever l'arbre (13).

2. Éolienne (20) selon la revendication 1, dans laquelle le au moins un patin mobile (3) comprend un agencement de vérin hydraulique (5) .

3. Éolienne (20) selon l'une quelconque des revendications précédentes, dans laquelle chacun parmi la pluralité de patins (3, 4) comprend une buse de vaporisation de lubrifiant (17, 19) conçue pour recevoir du lubrifiant en provenance de l'agencement de lubrification (23) et pour lubrifier le patin (3, 4) .

4. Éolienne (20) selon l'une quelconque des revendications précédentes, dans laquelle chacun parmi la pluralité de patins (3, 4) est agencé au sein d'une moitié inférieure d'un périmètre de l'arbre (13).

5. Éolienne (20) selon l'une quelconque des revendications précédentes, comprenant en outre une unité de commande (24) raccordée au au moins un patin mobile (3) et à l'agencement de lubrification (23) et conçue pour, lors d'une première étape, commander au au moins un patin mobile (3) de soulever l'arbre (13) et commander à l'agencement de lubrification (23) de fournir du lubrifiant au au moins un autre patin (4) parmi la pluralité de patins (3, 4).

6. Éolienne (20) selon la revendication précédente, dans laquelle l'unité de commande (24) est en outre conçue pour, lors d'une deuxième étape, commander au au moins un patin mobile (3) de se rétracter et commander à l'agencement de lubrification (23) de fournir du lubrifiant au au moins un patin mobile (3).

7. Éolienne (20) selon la revendication 5 ou 6, dans laquelle l'unité de commande (24) est en outre conçue pour répéter les première et deuxième étapes pendant un démarrage de l'éolienne (20) .

8. Utilisation d'une éolienne (20) selon l'une quelconque des revendications précédentes afin de générer de l'énergie électrique.
